# FASCICULE DE BREVET EUROPEEN

(11) **EP 3 008 130 B1**
(45) Date de publication et mention de la délivrance du brevet: **22.08.2018**
(21) Numéro de dépôt: 14734866.8
(22) Date de dépôt: 02.06.2014
(51) Int. Cl.: C08L 77/06, C08J 3/22, C08J 5/04, C08K 7/06, C08K 7/24, C08K 3/04

(54) **COMPOSITION A BASE DE POLYAMIDE MXD.10**
ZUSAMMENSETZUNG AUS POLYAMID MXD.10
COMPOSITION MADE FROM POLYAMIDE MXD.10

(30) Priorité: 14.06.2013 FR 1355539
(43) Date de publication de la demande: 20.04.2016
(73) Titulaire: Arkema France, 92700 Colombes (FR)
(72) Inventeur: BRULE, Benoît, F-27170 Beaumont-le-Roger (FR); CHIQUOT, Aude, F-27300 Bernay (FR); DECRAEMER, Nadine, F-27170 Beaumontel (FR); DEYRAIL, Yves, F-27930 Aviron (FR); JEANCOLAS, Lionel, F-27300 Menneval (FR)
(86) Numéro de dépôt international: PCT/FR2014/051293
(87) Numéro de publication internationale: WO 2014/199045

(56) Documents cités:
- US-A- 4 822 846
- US-A1- 2012 183 711
- US-A1- 2013 072 613
- BIAO WANG ET AL: "Crystallization and morphology of polyamide 1010/single-walled carbon nanotube nanocomposites under elevated pressure", POLYMER INTERNATIONAL, vol. 61, no. 9, 30 septembre 2012 (2012-09-30), pages 1462-1469, XP055078395, ISSN: 0959-8103, DOI: 10.1002/pi.4236
- ROBERT SOCHER ET AL: "Electrical and thermal properties of polyamide 12 composites with hybrid fillers systems of multiwalled carbon nanotubes and carbon black", COMPOSITES SCIENCE AND TECHNOLOGY, ELSEVIER, UK, vol. 71, no. 8, 12 mars 2011 (2011-03-12), pages 1053-1059, XP028212295, ISSN: 0266-3538, DOI: 10.1016/J.COMPSCITECH.2011.03.004 [extrait le 2011-03-17]

## Description

### DOMAINE DE L'INVENTION

La présente invention se rapporte à une composition à base de polyamides, et notamment à partir de polyamide MXD.10, à son procédé de préparation, à son procédé de mise en forme, ainsi qu'à ses utilisations, notamment dans la fabrication d'objets divers, comme des biens de consommation courante tels que des équipements électriques, électroniques ou automobiles, du matériel médical et chirurgical, de l'emballage ou encore des articles de sport.

### ARRIERE-PLAN TECHNIQUE

Parmi les polyamides que l'on connaît à ce jour, certains présentent un intérêt majeur du fait de leurs remarquables propriétés mécaniques, notamment en raison de leurs modules de traction et de flexion élevés.

On peut notamment citer les polyphtalamides (PPA) qui sont des polyamides semi-aromatiques qui présentent un module de traction élevé de l'ordre de 3 GPa. C'est également le cas du polyamide MXD.6, produit de la condensation de la MXD et de l'acide adipique, MXD désignant la méta-xylylène diamine (éventuellement mélangée avec une quantité minoritaire de para-xylylène diamine ou PXD).

Si les PPA et le MXD.6 sont très satisfaisants en termes de propriétés mécaniques (en particulier module de traction élevé), ils présentent toutefois deux inconvénients majeurs :
- Premièrement, compte tenu de leur température de fusion élevée, les PPA et le MXD.6 présentent une température de transformation élevée (typiquement supérieure à 280°C). En plus d'être consommatrice d'énergie, la mise en oeuvre à une température de transformation élevée limite l'introduction, dans les compositions à base de PPA ou de MXD.6, de certains renforts et/ou additifs qui se dégradent à de telles températures.
- Deuxièmement, du fait de leur température de transition vitreuse (Tg) également élevée et de leur cinétique de cristallisation lente, la mise en forme des matériaux à base de PPA ou de MXD.6 nécessite d'opérer à des températures de moule relativement élevées, typiquement de l'ordre de 120°C à 130°C (30 à 40°C au-dessus de la Tg), pour obtenir une cristallisation maximale et donc conférer au matériau des propriétés mécaniques et de stabilité dimensionnelle optimales.

Plus particulièrement, lors de la mise en forme par injection-moulage (ou moulage par injection) des matériaux à base de PPA ou MXD.6, il est nécessaire d'utiliser des moules utilisant de l'huile comme fluide caloporteur, de tels moules étant plus contraignants d'utilisation et moins répandus chez les mouleurs que des moules utilisant de l'eau comme fluide caloporteur.

Pour optimiser la cristallisation d'une composition à base de MXD.6, l'article intitulé Effect of Nucleating Additives on Crystallization of Poly(m-xylylene adipamide) et publié dans la revue Polymer Engineering and Science en 2007, p.365-373, propose l'introduction d'agents nucléants, en l'espèce du talc et du PA 6.6 dont la température de fusion est de l'ordre de 250°C.

Le polyamide MXD.10, produit de la condensation de la MXD et de l'acide sébacique (acide décanedioïque), présente également de bonnes propriétés mécaniques, et notamment un module de traction élevé.

Comme le MXD.10 présente une température de fusion (d'environ 193°C) inférieure à celle des PPA ou du MXD.6, sa température de transformation comprise entre 200°C et 270°C, et plus généralement comprise entre 210°C et 260°C, est moins élevée que celle des PPA et du MXD.6, ce qui limite la consommation en énergie. On peut par ailleurs envisager des compositions à base de MXD.10 comprenant certains renforts et/ou additifs qui se dégradent aux températures de transformation des PPA et du MXD.6.

De plus, la densité du MXD.10 est inférieure à celle généralement observée sur les PPA ou le MXD.6. Ainsi, les objets obtenus à partir de compositions à base de MXD.10 présentent l'avantage d'être plus légers comparés à ceux obtenus à partir de compositions à base de PPA ou de MXD.6.

En revanche, comme dans le cas des PPA ou du MXD.6, une température de moule élevée (typiquement de l'ordre de 120°C) est nécessaire lors de sa mise en forme par injection-moulage pour assurer une cristallisation maximale du produit et donc conférer des propriétés mécaniques et de stabilité dimensionnelle optimales.

Pour améliorer les conditions de moulage d'une composition à base de MXD.10, notamment en abaissant la durée de l'étape de refroidissement lors de la mise en forme par injection-moulage, le document EP 0 272 503 propose d'ajouter, à une composition comprenant 100 parties en poids de polyamide MXD.10, de 1 à 20 parties en poids d'un polyamide cristallin ayant une température de fusion supérieure d'environ 20 à 30°C à celle du MXD.10.

Le polyamide cristallin se comporte donc comme un agent nucléant, en l'absence de tout autre agent nucléant du type charge minérale, comme le talc précédemment mentionné.

Dans le document EP 0 272 503, les meilleures conditions de moulage, en particulier un cycle rapide, sont obtenues pour une température de moule de 130°C.

Par ailleurs, le document WO 2011/010039 décrit une composition à base de polyamide de type MXD.10 ayant une température de fusion Tf₁, comprenant un deuxième polyamide ayant une température de fusion Tf₂ comprise entre Tf₁-40°C et Tf₁+20°C. Ce deuxième polyamide joue le rôle d'agent nucléant. Il permet de contrôler la cristallisation de la composition.

Toutefois, il existe encore un besoin de parvenir à accélérer la cinétique de cristallisation d'une composition à base de polyamide, et notamment à base de MXD.10 ou analogue, tout en conservant les propriétés mécaniques et de stabilité dimensionnelle du matériau cristallisé.

La demande de brevet US 2013/0072613 propose d'améliorer le comportement de cristallisation de compositions de polymère semi-aromatiques en ajoutant du graphène et le cas échéant un autre polyamide.

Biao Wang et al. (Polym. Int. 2012, 61 :1462-1469) rapportent une étude de la cristallisation de nanocomposites de polyamide 1010 comprenant des nanotubes de carbone sous pression élevée.

Robert Socher et al. (Composites Science and Technology, 71 (2011) 1053-1059) ont étudié l'effet de nanotubes de carbone et du noir de carbone comme charges conductrices hybrides sur les propriétés électriques et thermiques de composites à base de polyamide 12.

### RESUME DE L'INVENTION

L'invention concerne en premier lieu une composition comprenant un premier polyamide, un deuxième polyamide et de 0,1 à 5 % en masse de nanocharges carbonées, dans laquelle :
- le premier polyamide comporte un motif issu de la condensation de la méta-xylylène diamine ou d'un mélange de méta-xylylène diamine et de para-xylylène diamine avec l'acide sébacique, ledit premier polyamide présentant une température de fusion Tf₁ ;
- le deuxième polyamide présente une température de fusion Tf₂ supérieure ou égale à Tf₁-40°C,
dans lequel les nanocharges carbonées sont des nanotubes de carbone.

Selon un mode de réalisation, la composition comprend de 0,2 à 2 % en masse de nanocharges carbonées, de préférence de 0,5 à 1,5 % en masse de nanocharges carbonées.

Selon un mode de réalisation, le deuxième polyamide présente une température de fusion Tf₂ telle que Tf₁-40°C ≤ Tf₂ < Tf₁+60°C, de préférence Tf₁-40°C ≤ Tf₂ < Tf₁+20°C, de manière plus particulièrement préférée Tf₁-30°C ≤ Tf₂ ≤ Tf₁+10°C ; ou le deuxième polyamide est du polyundécanamide.

Selon un mode de réalisation, le deuxième polyamide est présent dans une proportion de 0,1 à 20 % en masse, de préférence de 1 à 10 % en masse, par rapport à la somme du premier polyamide et du deuxième polyamide.

Selon un mode de réalisation, le premier polyamide est un homopolyamide ou un copolyamide, la proportion molaire de motifs issu de la condensation de la méta-xylylène diamine ou d'un mélange de méta-xylylène diamine et de para-xylylène diamine avec l'acide sébacique dans ledit copolyamide étant de préférence supérieure ou égale à 90 %, et plus préférentiellement supérieure ou égale à 95 %.

Selon un mode de réalisation, la composition comprend en outre des renforts, avantageusement des fibres, préférentiellement des fibres de verre et/ou des fibres de carbone, la proportion massique de renforts dans la composition étant de préférence inférieure ou égale à 70 %, avantageusement de 15 à 65 %, et plus préférentiellement de 20 à 60 %.

Selon un mode de réalisation, la composition présente une résistivité surfacique supérieure ou égale à 10¹⁰ Ω/sq, de préférence supérieure ou égale à 10¹² Ω/sq, déterminée selon le standard ASTM D257.

L'invention concerne également l'utilisation de nanocharges carbonées en tant qu'agent nucléant pour la cristallisation d'une composition comprenant un premier polyamide et un deuxième polyamide, dans laquelle :
- le premier polyamide comporte un motif issu de la condensation de la méta-xylylène diamine ou d'un mélange de méta-xylylène diamine et de para-xylylène diamine avec l'acide sébacique, ledit premier polyamide présentant une température de fusion Tf₁ ;
- le deuxième polyamide présente une température de fusion Tf₂ supérieure ou égale à Tf₁-40°C,
dans laquelle les nanocharges carbonées sont des nanotubes de carbone.

Selon un mode de réalisation, les nanocharges carbonées sont utilisées dans une teneur de 0,2 à 2 % en masse, de préférence de 0,5 à 1,5 % en masse, par rapport à la composition totale.

Selon un mode de réalisation, le deuxième polyamide présente une température de fusion Tf₂ telle que Tf₁-40°C ≤ Tf₂ < Tf₁+60°C, de préférence Tf₁-40°C ≤ Tf₂ < Tf₁+20°C, de manière plus particulièrement préférée Tf₁-30°C ≤ Tf₂ ≤ Tf₁+10°C ; ou le deuxième polyamide est du polyundécanamide.

Selon un mode de réalisation, le deuxième polyamide est présent dans une proportion de 0,1 à 20 % en masse, de préférence de 1 à 10 %, en masse, par rapport à la somme du premier polyamide et du deuxième polyamide.

Selon un mode de réalisation, le premier polyamide est un homopolyamide ou un copolyamide, la proportion molaire de motifs issu de la condensation de la méta-xylylène diamine ou d'un mélange de méta-xylylène diamine et de para-xylylène diamine avec l'acide sébacique dans ledit copolyamide étant de préférence supérieure ou égale à 90 %, plus préférentiellement supérieure ou égale à 95 %.

Selon un mode de réalisation, la composition comprend en outre des renforts, avantageusement des fibres, préférentiellement des fibres de verre et/ou des fibres de carbone, la proportion massique de renforts dans la composition étant de préférence inférieure ou égale à 70 %, avantageusement de 15 à 65 %, et plus préférentiellement de 20 à 60 %.

Selon un mode de réalisation, les nanocharges carbonées sont utilisées sous forme d'une poudre de nanocharges carbonées ; ou les nanocharges carbonées sont utilisées sous une forme incorporée dans un mélange-maître du deuxième polyamide.

L'invention concerne également un procédé de préparation d'une composition telle que décrite ci-dessus, comprenant la fourniture d'un mélange-maître comprenant le deuxième polyamide et les nanocharges carbonées, puis le mélange à l'état fondu, et de préférence le compoundage, dudit mélange-maître avec le premier polyamide et le cas échéant avec les renforts.

Selon un mode de réalisation, le procédé comprend une étape préliminaire de fabrication du mélange-maître par mélange à l'état fondu, et de préférence par compoundage, du deuxième polyamide avec les nanocharges carbonées.

Selon un mode de réalisation, le procédé comprend le mélange à l'état fondu, et de préférence le compoundage, du premier polyamide avec le deuxième copolyamide, et avec les nanocharges carbonées et le cas échéant les renforts, simultanément.

Selon un mode de réalisation, la composition est collectée sous forme de granules.

L'invention concerne également l'utilisation de la composition décrite ci-dessus, pour constituer une structure monocouche ou au moins une couche d'une structure multicouche.

Selon un mode de réalisation, la structure est sous forme de fibres, de film, de tube, de corps creux ou d'une pièce injectée.

L'invention concerne également un procédé de fabrication d'un objet, comprenant une étape de moulage par injection de la composition décrite ci-dessus.

L'invention concerne également un objet fabriqué à partir de la composition décrite ci-dessus, de préférence par moulage par injection.

Selon un mode de réalisation, l'objet est une pièce mécanique pour le transport et notamment pour automobile, autocar, camion, train, navire ou aéronef, un article destiné au bâtiment, un article domestique, un article électrique, un article électronique, un article médical ou un article de sport et notamment de ski.

La présente invention permet de surmonter les inconvénients de l'état de la technique. Elle fournit plus particulièrement une composition à base de polyamide MXD.10 ou de copolyamide comportant des motifs MXD.10, qui présente une cinétique de cristallisation accélérée par rapport à l'état de la technique, et notamment par rapport au document WO 2011/010039, tout en conservant les propriétés mécaniques et de stabilité dimensionnelle du matériau cristallisé.

L'invention offre également une accélération de la cinétique de cristallisation par rapport à l'utilisation d'agents nucléants classiques tels que le talc.

L'accélération de la cinétique de cristallisation permet de diminuer les temps de cycle en injection et d'augmenter la productivité.

Cela est accompli grâce à l'utilisation de nanocharges carbonées en tant qu'agent nucléant, en complément d'un deuxième polyamide semi-cristallin présentant une température de fusion proche de celle du premier polyamide - ledit deuxième polyamide jouant également le rôle d'agent nucléant, conjointement avec les nanocharges carbonées.

La composition selon l'invention permet d'obtenir un matériau ou objet doté d'excellentes propriétés mécaniques, avec notamment un module de traction de l'ordre de 3 GPa, cette composition présentant par ailleurs simultanément :
- une température de transformation de l'ordre de la température de transformation du polyamide MXD.10, c'est-à-dire avantageusement comprise entre 210°C et 260°C (et donc inférieure à celle des PPA et du MXD.6, et compatible avec l'introduction de renforts et/ou additifs qui se dégradent aux températures de transformation des PPA ou du MXD.6) ;
- une température de moule, notamment pour une mise en forme par un procédé de moulage par injection, qui est compatible avec l'utilisation d'eau comme fluide caloporteur, et donc typiquement inférieure à 100°C et, de préférence inférieure à 90°C.

La présence conjointe du deuxième polyamide et des nanocharges carbonées permet un contrôle efficace de la cristallisation de la composition à base de polyamide MXD.10.

### BREVE DESCRIPTION DES FIGURES

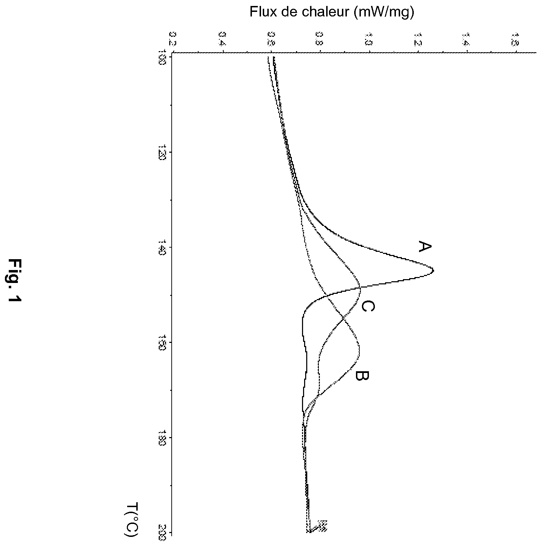

La **figure 1** est un graphique illustrant des mesures de calorimétrie différentielle à balayage concernant deux compositions selon l'invention (B, C) et une composition de référence (A) - voir l'exemple ci-dessous. En abscisse figure la température en °C et en ordonnée figure le flux de chaleur en mW/mg.

### DESCRIPTION DE MODES DE REALISATION DE L'INVENTION

L'invention est maintenant décrite plus en détail et de façon non limitative dans la description qui suit.

### Polyamides

Le premier polyamide de la composition selon l'invention est soit un homopolyamide, de formule MXD.10, soit un copolyamide, répondant à la formule générique MXD.10/Z, c'est-à-dire un copolyamide comportant des motifs MXD.10 et d'autres motifs Z (étant entendu que le copolyamide peut comporter un seul autre motif (répétitif) Z, ou dans certains cas deux ou plus de deux autres motifs Z différents).

Le motif Z (ou chaque motif Z) peut notamment être un motif obtenu à partir d'un aminoacide, un motif obtenu à partir d'un lactame ou un motif correspondant à la condensation d'une diamine en Ca et d'un diacide en Cb, a représentant le nombre de carbones de la diamine et b représentant le nombre de carbones du diacide.

L'homopolyamide résulte de la polycondensation de méta-xylylène diamine (également appelée MXD ou 1,3-xylylène diamine) ou d'un mélange de MXD et de para-xylylène diamine (également appelée PXD ou 1,4-xylylène diamine), la MXD étant majoritaire dans le mélange, avec l'acide sébacique, qui est un diacide linéaire aliphatique en C10.

Le copolyamide résulte de la polycondensation :
- de MXD ou d'un mélange de MXD et de PXD, la MXD étant majoritaire dans le mélange,
- d'acide sébacique, qui est un diacide linéaire aliphatique en C10, et
- d'au moins un alpha-oméga aminoacide carboxylique, lactame ou diamine en Ca et diacide en Cb.

La proportion molaire de motifs Z dans le copolyamide MXD.10/Z peut être par exemple de 0,1 à 10 % et avantageusement de 0,5 à 5 %.

Lorsque le motif Z représente les restes de la condensation d'un alpha-oméga aminoacide carboxylique, ce dernier peut par exemple être choisi parmi l'acide 9-aminononanoïque (Z=9), l'acide 10-aminodécanoïque (Z=10), l'acide 12-aminododécanoïque (Z=12) et l'acide 11-aminoundécanoïque (Z=11) ainsi que ses dérivés, notamment l'acide N-heptyl-11-aminoundécanoïque.

Lorsque le motif Z représente les restes de la condensation d'un lactame, il peut notamment être choisi parmi le caprolactame (Z=6) et le lauryllactame (Z=12).

Lorsque le motif Z représente les restes de la condensation d'une diamine en Ca et d'un diacide en Cb, la diamine en Ca peut être une diamine aliphatique, linéaire ou ramifiée, une diamine cycloaliphatique ou encore une diamine aromatique. Le diacide en Cb peut être un diacide carboxylique aliphatique, linéaire ou ramifié, un diacide cycloaliphatique ou encore un diacide aromatique.

Il est précisé que a représente le nombre de carbones de la diamine en Ca et b représente le nombre de carbones du diacide carboxylique en Cb. a et b valent de préférence chacun de 6 à 36.

La composition selon l'invention peut comprendre un seul premier polyamide, ou éventuellement plusieurs premiers polyamides tels que définis ci-dessus.

Le deuxième polyamide est un polyamide distinct du premier polyamide.

Il présente une température de fusion Tf₂ supérieure ou égale à Tf₁-40°C (et de préférence inférieure à Tf₁+60°C), Tf₁ étant la température de fusion du premier polyamide.

La température de fusion est déterminée selon la norme ISO 11357-3.

Le deuxième polyamide est un polyamide semi-cristallin, par opposition à un polyamide amorphe, dépourvu de température de fusion.

Selon des versions avantageuses de l'invention, la température de fusion Tf₂ est telle que Tf₁-40°C ≤ Tf₂ < Tf₁+20°C ; et de préférence telle que Tfi-30°C ≤ Tf₂ ≤ Tf₁+10°C.

Dans une version avantageuse de l'invention, ce deuxième polyamide est choisi parmi le PA 11 (polyundécanamide), le PA 12 (polylauroamide), le PA 10.10 (polydécaméthylène sébaçamide), le PA 10.12 (polydécaméthylène dodécanamide), le PA 6 (polycaprolactame), le PA 6.10 (polyhexaméthylène sébaçamide), le PA 6.12 (polyhexaméthylène dodécanediamide), le PA 6.14 (polyhexaméthylène tétradécanediamide) et le PA 10.14 (polydécaméthylène tétradécanamide). Le PA 11, le PA 12, le PA 10.10 et le PA 10.12 sont préférés, car ils présentent une température de fusion relativement faible (inférieure à Tf₁+20°C), ce qui conduit à une cristallisation améliorée. Le PA 11 est particulièrement préféré.

Il également possible d'envisager l'utilisation de deux, ou plus, deuxièmes polyamides tels que définis ci-dessus.

La composition selon l'invention comprend ledit deuxième polyamide dans une proportion pondérale de 0,1 à 20 %, et avantageusement de 1 à 10%, par rapport au poids total du premier polyamide et du deuxième polyamide.

Le premier polyamide et/ou le deuxième polyamide peuvent être, en tout ou partie, bioressourcés, c'est-à-dire comporter du carbone organique issu de la biomasse et déterminé selon la norme ASTM D6866. Dans une telle hypothèse, on peut considérer que la composition selon l'invention est elle-même partiellement bioressourcée, ce qui présente un avantage par rapport aux compositions à base de polyamide(s) issues de matières premières fossiles comme les PPA et les polyamides à base de MXD.6.

En particulier, l'acide sébacique du motif MXD.10 et/ou le motif Z peuvent être bioressourcés. De même, le deuxième polyamide peut être bioressourcé, comme dans le cas particulier où le deuxième polyamide est le PA11, polyamide provenant de l'huile de ricin.

### Nanocharqes carbonées

Des nanocharges carbonées sont utilisées, selon l'invention, en tant qu'agent nucléant pour la cristallisation de la composition de polyamide.

Par « *nanocharges carbonées* » on entend des charges majoritairement composées de carbone et présentant au moins une dimension (dimension minimale) inférieure ou égale à 100 nm, de préférence inférieure ou égale à 50 nm, et de manière plus particulièrement préférée inférieure ou égale à 20 nm.

De préférence, la dimension minimale des nanocharges carbonées est supérieure ou égale à 0,4 nm, de préférence supérieure ou égale à 1 nm.

Les nanocharges carbonées utilisées selon l'invention sont des nanotubes de carbone.

Les nanotubes de carbone sont des structures tubulaires creuses comportant un plan graphitique disposé autour d'un axe longitudinal ou plusieurs plans graphitiques (ou feuillets) disposés de façon concentrique autour d'un axe longitudinal.

Les nanotubes de carbone peuvent être du type à paroi unique, à double paroi ou à parois multiples. Les nanotubes à double paroi peuvent notamment être préparés comme décrit par Flahaut et al dans Chem. Com. (2003), p.1442. Les nanotubes à parois multiples peuvent être préparés comme décrit dans le document WO 03/02456.

Les nanotubes de carbone ont généralement un diamètre moyen (perpendiculaire à l'axe longitudinal, la valeur moyenne étant une moyenne linéique le long de l'axe longitudinal et statistique sur un ensemble de nanotubes) allant de 0,4 à 100 nm, de préférence de 1 à 50 nm et, mieux, de 2 à 30 nm, voire de 10 à 15 nm, et avantageusement une longueur de 0,1 à 10 µm. Le rapport longueur/diamètre est de préférence supérieur à 10 et le plus souvent supérieur à 100. Ces valeurs s'entendent des nanotubes de carbone avant introduction dans une matrice polymère. En effet, lors de l'incorporation dans la matrice polymère, les nanotubes ont tendance à être brisés, et donc à présenter une longueur réduite dans la composition finale (par exemple un rapport longueur/diamètre de 5 à 10).

La surface spécifique vaut par exemple de 100 à 300 m²/g, avantageusement de 200 à 300 m²/g, et leur densité apparente peut notamment valoir de 0,05 à 0,5 g/cm³ et plus préférentiellement de 0,1 à 0,2 g/cm³. Les nanotubes multiparois peuvent par exemple comprendre de 5 à 15 feuillets (ou parois) et plus préférentiellement de 7 à 10 feuillets. Ces nanotubes peuvent être traités ou non.

Les dimensions et notamment le diamètre moyen des nanotubes de carbone peuvent être déterminées par microscopie électronique à transmission.

Un exemple de nanotubes de carbone bruts est notamment commercialisé par Arkema sous la dénomination commerciale Graphistrength® C100.

Ces nanotubes de carbone peuvent être purifiés et/ou traités (par exemple oxydés) et/ou broyés et/ou fonctionnalisés, avant leur mise en oeuvre dans le cadre de l'invention.

Le broyage des nanotubes de carbone peut être notamment effectué à froid ou à chaud et être réalisé selon les techniques connues mises en oeuvre dans des appareils tels que broyeurs à boulets, à marteaux, à meules, à couteaux, à jet de gaz ou tout autre système de broyage susceptible de réduire la taille du réseau enchevêtré de nanotubes. On préfère que cette étape de broyage soit pratiquée selon une technique de broyage par jet de gaz et en particulier dans un broyeur à jet d'air.

La purification des nanotubes de carbone bruts ou broyés peut être réalisée par lavage à l'aide d'une solution d'acide sulfurique, de manière à les débarrasser d'éventuelles impuretés minérales et métalliques résiduelles, comme par exemple le fer, provenant de leur procédé de préparation. Le rapport pondéral des nanotubes à l'acide sulfurique peut notamment valoir de 1:2 à 1:3. L'opération de purification peut par ailleurs être effectuée à une température allant de 90 à 120°C, par exemple pendant une durée de 5 à 10 heures. Cette opération peut avantageusement être suivie d'étapes de rinçage à l'eau et de séchage des nanotubes de carbone purifiés. Les nanotubes de carbone peuvent en variante être purifiés par traitement thermique à haute température, typiquement supérieur à 1000°C.

L'oxydation des nanotubes de carbone est avantageusement réalisée en mettant ceux-ci en contact avec une solution d'hypochlorite de sodium renfermant de 0,5 à 15 % en poids de NaOCl et de préférence de 1 à 10 % en poids de NaOCl, par exemple dans un rapport pondéral des nanotubes de carbone à l'hypochlorite de sodium allant de 1:0,1 à 1:1. L'oxydation est avantageusement réalisée à une température inférieure à 60°C et de préférence à température ambiante, pendant une durée allant de quelques minutes à 24 heures. Cette opération d'oxydation peut avantageusement être suivie d'étapes de filtration et/ou centrifugation, lavage et séchage des nanotubes oxydés.

La fonctionnalisation des nanotubes de carbone peut être réalisée par greffage de motifs réactifs tels que des monomères vinyliques à leur surface. Le matériau constitutif des nanotubes de carbone est utilisé comme initiateur de polymérisation radicalaire après avoir été soumis à un traitement thermique à plus de 900°C, en milieu anhydre et dépourvu d'oxygène, qui est destiné à éliminer les groupes oxygénés de sa surface. Il est ainsi possible de polymériser du méthacrylate de méthyle ou du méthacrylate d'hydroxyéthyle à la surface de nanotubes de carbone en vue de faciliter notamment leur dispersion dans les polyamides.

On utilise de préférence dans la présente invention des nanotubes de carbone bruts éventuellement broyés, c'est-à-dire des nanotubes de carbone qui ne sont ni oxydés ni purifiés ni fonctionnalisés et n'ont subi aucun autre traitement chimique et/ou thermique.

La teneur massique en nanocharges carbonées dans la composition (par rapport au poids total de la composition) peut être : de 0,1 à 0,2 % ; ou de 0,2 à 0,3 %, ou de 0,3 à 0,4 % ; ou de 0,4 à 0,5 % ; ou de 0,5 à 0,6 % ; ou de 0,6 à 0,7 % ; ou de 0,7 à 0,8 % ; ou de 0,8 à 0,9 % ; ou de 0,9 à 1,0 % ; ou de 1,0 à 1,1 % ; ou de 1,1 à 1,2 % ; ou de 1,2 à 1,3 %, ou de 1,3 à 1,4 % ; ou de 1,4 à 1,5 % ; ou de 1,5 à 1,6 % ; ou de 1,6 à 1,7 % ; ou de 1,7 à 1,8 % ; ou de 1,8 à 1,9 % ; ou de 1,9 à 2,0 % ; ou de 2,0 à 2,1 % ; ou de 2,1 à 2,2 % ; ou de 2,2 à 2,3 %, ou de 2,3 à 2,4 % ; ou de 2,4 à 2,5 % ; ou de 2,5 à 2,6 % ; ou de 2,6 à 2,7 % ; ou de 2,7 à 2,8 % ; ou de 2,8 à 2,9 % ; ou de 2,9 à 3,0 % ; ou de 3,0 à 3,1 % ; ou de 3,1 à 3,2 % ; ou de 3,2 à 3,3 %, ou de 3,3 à 3,4 % ; ou de 3,4 à 3,5 % ; ou de 3,5 à 3,6 % ; ou de 3,6 à 3,7 % ; ou de 3,7 à 3,8 % ; ou de 3,8 à 3,9 % ; ou de 3,9 à 4,0 % ; ou de 4,0 à 4,1 % ; ou de 4,1 à 4,2 % ; ou de 4,2 à 4,3 %, ou de 4,3 à 4,4 % ; ou de 4,4 à 4,5 % ; ou de 4,5 à 4,6 % ; ou de 4,6 à 4,7 % ; ou de 4,7 à 4,8 % ; ou de 4,8 à 4,9 % ; ou de 4,9 à 5,0 %.

### Autres additifs

Selon une version avantageuse de l'invention, la composition peut en outre comprendre des renforts.

L'addition de renforts dans la composition de l'invention permet d'améliorer certaines des propriétés mécaniques, notamment le module de traction du matériau obtenu à partir de cette composition. On adapte la nature et la quantité de renforts à la valeur du module de traction recherchée, qui peut ainsi atteindre des valeurs très nettement supérieures à 3 GPa, par exemple de l'ordre de 20 GPa dans le cas des fibres de verre.

Par renforts, on entend les billes, les fibres courtes ou longues, les fibres continues tissées ou non, un mat tissé ou non tissé ou encore des broyats, des farines, permettant l'augmentation du module de traction lorsqu'ils sont combinés à des matrices polymères.

Les renforts peuvent être choisis par exemple parmi les billes de verre, des fibres qui peuvent être des fibres de verre, de carbone, des fibres polymériques, des fibres naturelles (par exemple végétales ou animales) et leurs mélanges.

Les fibres de carbone peuvent notamment avoir un diamètre de 5 à 15 µm.

Avantageusement, les renforts pourront être bioressourcés, c'est-à-dire comprendre du carbone organique issu de la biomasse et déterminé selon la norme ASTM D6866.

Les renforts bioressourcés susceptibles d'être utilisés dans le cadre de la présente invention sont les suivants :
- les fibres végétales qui comprennent les fibres provenant des poils séminaux de graines (coton, kapok), les fibres libériennes extraites de tiges de plantes (lin, chanvre, jute, ramie...), les fibres dures extraites de feuilles (sisal, abaca...), de troncs (chanvre de Manille, bois en général), d'enveloppes de fruits (noix de coco...),
- les fibres animales qui proviennent des poils, telle que la toison animale, et des sécrétions telle que la soie,
- les fibres de carbone issues de matières premières bioressourcées,
- les fibres polymériques issues de matières premières bioressourcées,
- les broyats d'écorces ou de pépins (noisettes, noix...), de carapaces animales (crabes...), de graines (riz...).

La température de transformation de la composition selon l'invention permet un large choix de renforts, par exemple de certaines fibres végétales, ce qui présente un réel intérêt économique et technique, notamment car le matériau ou objet obtenu à partir d'une composition comprenant de telles fibres végétales présente l'avantage d'être plus léger que celui obtenu à partir d'une composition comprenant certains autres renforts, du fait de la densité moindre de ces fibres végétales comparées à celle de ces autres renforts.

Dans une variante particulière de l'invention, les renforts sont avantageusement des fibres, préférentiellement des fibres de verre et/ou des fibres de carbone.

De manière préférée, la proportion pondérale des dits renforts est de 0 à 70 %, avantageusement de 15 à 65 %, et préférentiellement de 20 à 60 %, par rapport au poids total de la composition selon l'invention.

La composition selon l'invention peut également comprendre un ou plusieurs agents ignifugeants tels que, par exemple, Mg(OH)₂, des pyrophosphates de mélamine, des cyanurates de mélamine, des polyphosphates d'ammonium, des sels métalliques de l'acide phosphinique ou de l'acide diphosphinique, ou encore des polymères contenant au moins un sel métallique de l'acide phosphinique ou de l'acide diphosphinique.

Le sel peut par exemple être choisi parmi le méthyléthylphosphinate d'aluminium et le diéthylphosphinate d'aluminium. Des mélanges contenant de tels sels métalliques sont commercialisés par la société Clariant sous les dénominations commerciales Exolit OP1311, OP1312, OP1230 et OP1314.

La température de transformation de la composition selon l'invention permet un large choix d'agents ignifugeants, ce qui présente un réel intérêt économique et technique.

De préférence, la proportion pondérale d'agent ignifugeant vaut de 0 à 35 %, avantageusement de 10 à 30%, et préférentiellement de 15 à 25%, par rapport au poids total de la composition selon l'invention.

La composition peut également comprendre un ou plusieurs autres additifs couramment utilisé dans les compositions à base de polyamides (outre les éventuels renforts et agents ignifugeants décrits ci-dessus).

Le choix de tels additifs est plus large que pour les compositions à base de PPA ou de MXD.6 du fait de l'abaissement de la température de transformation de la composition selon l'invention.

Avantageusement, les additifs peuvent être bioressourcés, c'est-à-dire comprendre du carbone organique issu de la biomasse et déterminé selon la norme ASTM D6866.

La quantité et la nature des additifs qui peuvent être introduits dans les compositions de l'invention sont adaptées en fonction des effets recherchés.

A titre non limitatif, on peut citer au moins un additif choisi parmi les charges, les colorants, les stabilisants, notamment les stabilisants UV, les plastifiants, les modifiants chocs, les agents tensioactifs, les pigments, les azurants, les anti-oxydants, les lubrifiants, les cires naturelles et leurs mélanges.

Parmi les charges, on peut citer la silice, le kaolin, la magnésie, les scories et/ou l'oxyde de titane.

Il également envisageable d'inclure des charges conductrices dans la composition, telles que le graphite par exemple. De telles charges permettent de conférer des propriétés conductrices électriques à la composition de l'invention et donc, aux matériaux qui sont obtenus à partir de ladite composition.

Toutefois, dans une version préférée de l'invention, la composition est essentiellement dépourvue de charges conductrices électriques, ou totalement dépourvue de charges conductrices électriques. En particulier, les nanocharges carbonées présentes dans la composition en tant qu'agent nucléant ne sont pas présentes dans une quantité telle qu'elles puissent assurer une fonction de charges conductrices électriques. Ainsi, la composition selon l'invention est de préférence isolante. Autrement dit, après mise en forme de la composition, la résistivité surfacique mesurée est supérieure ou égale à 10¹⁰ Ω/sq, de préférence supérieure ou égale à 10¹² Ω/sq. Elle est par ailleurs de préférence inférieure ou égale à 10¹⁸ Ω/sq, déterminée selon le standard ASTM D257.

Une composition avantageuse au sens de l'invention peut comporter les proportions pondérales suivantes des différents composés suivants :
- de 10 à 99,9 % du premier polyamide et du deuxième polyamide (de préférence du PA 11), la proportion pondérale du deuxième polyamide représentant de 0,1 à 20 % de la combinaison du premier polyamide et du deuxième polyamide,
- de 0,1 à 5 % de nanotubes de carbone,
- de 0 à 70 % de fibres de verre et/ou de carbone,
- de 0 à 35 % d'un agent ignifugeant,
- de 0 à 20 %, et de préférence de 0 à 10 % d'autres additifs, pour atteindre un total de 100 %.

### Préparation de la composition selon l'invention

Selon l'invention, la composition peut être préparée par toute méthode qui permet d'obtenir un mélange homogène des polymères, des nanotubes de carbone et des éventuels renforts et autres additifs.

Parmi ces méthodes, on peut notamment citer l'extrusion à l'état fondu, le compactage ou encore le malaxage dans un malaxeur à rouleau.

Plus particulièrement, la composition selon l'invention est préparée par mélange à l'état fondu des polymères, avec les nanocharges carbonées et éventuels additifs (dont fibres de renfort) par compoundage sur un outil connu de l'homme de l'art comme une extrudeuse bi-vis, un co-malaxeur ou un mélangeur. On obtient alors des granulés. De préférence les granulés sont de dimension millimétrique. Ils peuvent par exemple avoir une longueur (dimension maximale) de 2 à 3 mm environ et un diamètre (perpendiculairement à la longueur) d'environ 2 mm.

Selon un premier mode de réalisation, on procède au mélange simultané de l'ensemble des composés, de préférence par compoundage.

Selon un deuxième mode de réalisation, au procède d'abord au mélange du deuxième polyamide avec les nanocharges carbonées, pour préparer un mélange-maître. Puis dans un second temps on procède au mélange de ce mélange-maître avec le premier polyamide, et les éventuels additifs (dont fibres de renfort). Chacune des deux étapes est de préférence effectuée par compoundage.

Dans une variante de ce deuxième mode de réalisation, on fournit un mélange-maître déjà préparé comprenant le deuxième polyamide et des nanocharges carbonées (par exemple tel que commercialisé par Arkema, notamment sous la référence Graphistrength® C M3-20, PA11 masterbatch).

Il a été constaté, de manière surprenante, que l'utilisation d'un tel mélange-maître permet d'obtenir de bons résultats en termes d'accélération de la cinétique de cristallisation de la composition ce qui, sans vouloir être lié par une théorie, suggère que les nanocharges carbonées se distribuent correctement dans le premier polyamide lors de l'étape de mélange du mélange-maître avec celui-ci.

La composition selon l'invention, obtenue par le procédé de préparation décrit ci-dessus, peut être transformée pour une utilisation ou une transformation ultérieure connue par l'homme de l'art, notamment à l'aide d'outils tels qu'une presse à injecter ou une extrudeuse.

La composition selon l'invention peut également être introduite dans une extrudeuse bi-vis alimentant, en l'absence d'étape de granulation intermédiaire, une presse à injecter ou une extrudeuse selon un dispositif de mise en oeuvre connu par l'homme de l'art.

### Utilisation de la composition selon l'invention

La composition selon l'invention peut être utilisée pour constituer une structure.

Cette structure peut être monocouche lorsqu'elle n'est formée que de la composition selon l'invention.

Cette structure peut également être une structure multicouche, lorsqu'elle comprend au moins deux couches et que l'une au moins des différentes couches formant la structure est formée de la composition selon l'invention.

La structure, qu'elle soit monocouche ou multicouche, peut notamment se présenter sous la forme de fibres, d'un film, d'un tube, d'un corps creux ou d'une pièce injectée. L'invention se prête particulièrement bien à la réalisation d'une pièce ou d'un objet obtenu par un procédé de moulage par injection.

Il est possible de fabriquer un objet à partir d'au moins une composition telle que définie ci-dessus, notamment par injection, par extrusion, par co- extrusion ou par multi-injection.

Le procédé de fabrication comprend de préférence une étape de moulage par injection.

Les propriétés mécaniques (notamment module de traction) du matériau ou objet obtenu à partir de la composition selon l'invention sont très peu dépendantes de la température du moule choisie, notamment lors d'une étape de mise en forme par injection-moulage, grâce à une bonne cristallisation améliorée de la composition. La composition selon l'invention offre donc l'avantage de pouvoir être mise en forme au moyen de tout type de moule, qu'il soit régulé par de l'eau ou par de l'huile comme fluide caloporteur. En particulier, on peut envisager une étape de mise en forme par injection-moulage à une température de moule inférieure à 100°C et avantageusement inférieure à 90°C.

Des températures de moule allant même jusqu'à 35°C sont envisageables. Inversement, on peut recourir à des températures de moule supérieures à 100°C, comme celles couramment utilisées avec les PPA ou le MXD.6.

Comparée aux compositions à base de PPA ou de MXD.6, la composition selon l'invention est moins consommatrice en énergie, la température de transformation et la température des moules étant avantageusement plus faibles.

Les objets préparés à partir de la composition selon l'invention peuvent être utilisés dans les domaines du transport (notamment pièces mécaniques pour automobiles, camions, trains, autocars, nautisme, aéronautique...), du bâtiment, du secteur domestique, de l'électricité, de l'électronique, du médical ou encore du sport (notamment du ski).

La composition selon l'invention présentant une densité plus faible que les compositions à base de PPA ou de MXD.6, un objet obtenu à partir d'une telle composition est donc plus léger pour un même volume.

La composition selon l'invention peut avantageusement être utilisée pour la réalisation de tout ou partie d'éléments de biens d'équipements électriques et électroniques, tels que solénoïdes encapsulés, pompes, téléphones, ordinateurs, imprimantes, télécopieurs, modems, moniteurs, télécommandes, caméras, disjoncteurs, gaines de câbles électriques, fibres optiques, interrupteurs, systèmes multimédias. Ces éléments de biens d'équipements électriques et électroniques couvrent non seulement les parties structurelles de tels biens (boîtiers, coques...) mais également leurs éventuels accessoires associés (écouteurs, éléments de connectique, câbles...).

Elle peut être aussi utilisée pour la réalisation de tout ou partie d'équipements automobiles tels que connecteurs de tubes, pompes, pièces injectées sous capot moteur, pièces injectées type pare-chocs, planches de bord, habillages de portières.

Elle peut être également utilisée pour la réalisation de tout ou partie de matériels médical ou chirurgical, d'emballages ou encore d'articles de sport ou de loisirs, tels que des équipements de vélo (selles, pédales...), ou pour constituer des éléments rigides de chaussures, par exemple.

Elle peut encore être utilisée pour la réalisation de tout ou partie d'éléments d'équipements domestiques (climatiseur...) ou électroménagers (cafetière, four, lave-linge, lave-vaisselle...).

### EXEMPLE

L'exemple suivant illustre l'invention sans la limiter.

On prépare des compositions à base de polyamide, à partir des composés suivants :
- Homopolyamide PA MXD.10: polymère comportant 57% de carbone bioressourcé et présentant une température de fusion de 193°C, fournisseur Arkema.
- Polyamide PA 11 : polymère comportant 100% de carbone bioressourcé et présentant une température de fusion de 185°C, fournisseur Arkema.
- Talc : Stéamic OOS DG, fournisseur Luzenac.
- Fibres de verre : renfort commercialisé sous la référence CT FT 692, fournisseur Asahi.
- Antioxydant : référence Irganox 1010, fournisseur Ciba.
- Stéarate de Calcium : lubrifiant, fournisseur BASF.
- Nanotubes de carbone (NTC) : référence Graphistrength® C100 ou C M3-20, fournisseur Arkema.

Les formulations des compositions (en proportions massiques) et les procédés de préparation sont les suivants :

| | Composition A (comparatif) | Composition B (invention) | Composition C (invention) |
|---|---|---|---|
| PA MXD.10 | 44 % | 44 % | 44 % |
| PA 11 | 4,3 % | 4,3 % | 4,3 % |
| Fibres de verre | 50 % | 50 % | 50 % |
| Talc | 1 % | - | - |
| NTC | - | 1 % | 1 % |
| Antioxydant + stéarate | 0,7 % | 0,7 % | 0,7 % |
| Procédé de fabrication | une étape | deux étapes | une étape |

Le procédé de fabrication en une étape repose sur le compoundage de l'ensemble des composés dans une extrudeuse Leitstriz à 260°C.

Le procédé de fabrication en deux étapes repose sur le compoundage du PA MXD.10, des fibres de verre, de l'antioxydant, du stéarate, et d'un mélange-maître, dans une extrudeuse bi-vis Werner 40 à 260°C. Le mélange maître comprend le PA 11 et les nanotubes de carbone. Le mélange maître disponible auprès d'Arkema sous la référence Graphistrength® C M3-20 est réalisé par mélangeage du PA11 et des nanotubes de carbone Graphistrength® C100 sur un co-malaxeur BUSS.

La cinétique de cristallisation de chacune des compositions A, B, C est suivie, en anisotherme, par calorimétrie différentielle à balayage, lors du refroidissement suivant l'extrusion. Les courbes obtenues sont représentées en **Figure 1****.** Il est à noter que dans ces conditions un homopolyamide MXD.10 ne cristalliserait pas.

Les températures de pic de cristallisation et de début de cristallisation sont résumées ci-dessous :

| | Température de pic de cristallisation | Température de début de cristallisation |
|---|---|---|
| Composition A | 145°C | 153°C |
| Composition B | 165°C | 177°C |
| Composition C | 150°C | 177°C |

On constate donc que la présence des nanotubes de carbone accélère la cinétique de cristallisation (la cristallisation intervenant à plus haute température lors du refroidissement de la composition).

On procède à la fabrication d'objets par moulage par injection à partir des compositions A, B et C, avec une température de moule de 115°C. Deux types d'objets ont été fabriqués : des objets de 2 mm d'épaisseur (norme ISO 527 1 BA) et des objets de 1 mm d'épaisseur (plaque de 100 mm ×100 mm). On constate que les compositions B et C permettent de diminuer le temps de cycle de 20 % par rapport à la composition A de référence.

## Revendications

1. Composition comprenant un premier polyamide, un deuxième polyamide, distinct du premier polyamide, et de 0,1 à 5 % en masse de nanocharges carbonées, dans laquelle :
- le premier polyamide comporte un motif issu de la condensation de la méta-xylylène diamine ou d'un mélange de méta-xylylène diamine et de para-xylylène diamine avec l'acide sébacique, ledit premier polyamide présentant une température de fusion Tf₁ ;
- le deuxième polyamide présente une température de fusion Tf₂ supérieure ou égale à Tf₁-40°C
et dans laquelle les nanocharges carbonées sont des nanotubes de carbone.

2. Composition selon la revendication 1, comprenant de 0,2 à 2 % en masse de nanocharges carbonées, de préférence de 0,5 à 1,5 % en masse de nanocharges carbonées.

3. Composition selon la revendication 1 ou 2, dans laquelle le deuxième polyamide présente une température de fusion Tf₂ telle que Tf₁-40°C ≤ Tf₂ < Tf₁+60°C, de préférence Tf₁-40°C ≤ Tf₂ < Tf₁+20°C, de manière plus particulièrement préférée Tf₁-30°C ≤ Tf₂ ≤ Tf₁+10°C; ou dans laquelle le deuxième polyamide est du polyundécanamide.

4. Composition selon l'une des revendications 1 à 3, dans laquelle le deuxième polyamide est présent dans une proportion de 0,1 à 20 % en masse, de préférence de 1 à 10 % en masse, par rapport à la somme du premier polyamide et du deuxième polyamide.

5. Composition selon l'une des revendications 1 à 4, dans laquelle le premier polyamide est un homopolyamide ou un copolyamide, la proportion molaire de motifs issu de la condensation de la méta-xylylène diamine ou d'un mélange de méta-xylylène diamine et de para-xylylène diamine avec l'acide sébacique dans ledit copolyamide étant de préférence supérieure ou égale à 90 %, et plus préférentiellement supérieure ou égale à 95 %.

6. Composition selon l'une des revendications 1 à 5, comprenant en outre des renforts, avantageusement des fibres, préférentiellement des fibres de verre et/ou des fibres de carbone, la proportion massique de renforts dans la composition étant de préférence inférieure ou égale à 70 %, avantageusement de 15 à 65 %, et plus préférentiellement de 20 à 60 %.

7. Composition selon l'une des revendications 1 à 6, présentant une résistivité surfacique supérieure ou égale à 10¹⁰ Ω/sq, de préférence supérieure ou égale à 10¹² Ω/sq, déterminée selon le standard ASTM D257.

8. Utilisation de nanocharges carbonées en tant qu'agent nucléant pour la cristallisation d'une composition comprenant un premier polyamide et un deuxième polyamide, distinct du premier polyamide, dans laquelle :
- le premier polyamide comporte un motif issu de la condensation de la méta-xylylène diamine ou d'un mélange de méta-xylylène diamine et de para-xylylène diamine avec l'acide sébacique, ledit premier polyamide présentant une température de fusion Tf₁ ;
- le deuxième polyamide présente une température de fusion Tf₂ supérieure ou égale à Tf₁-40°C,
dans laquelle les nanocharges carbonées sont des nanotubes de carbone.

9. Utilisation selon la revendication 8, dans laquelle les nanocharges carbonées sont utilisées dans une teneur de 0,2 à 2 % en masse, de préférence de 0,5 à 1,5 % en masse, par rapport à la composition totale.

10. Utilisation selon la revendication 8 ou 9, dans laquelle le deuxième polyamide présente une température de fusion Tf₂ telle que Tf₁-40°C ≤ Tf₂ < Tf₁+60°C, de préférence Tf₁-40°C ≤ Tf₂ < Tf₁+20°C, de manière plus particulièrement préférée Tf₁-30°C ≤ Tf₂ ≤ Tf₁+10°C; ou dans laquelle le deuxième polyamide est du polyundécanamide.

11. Utilisation selon l'une des revendications 8 à 10, dans laquelle le deuxième polyamide est présent dans une proportion de 0,1 à 20 % en masse, de préférence de 1 à 10 %, en masse, par rapport à la somme du premier polyamide et du deuxième polyamide.

12. Utilisation selon l'une des revendications 8 à 11, dans laquelle le premier polyamide est un homopolyamide ou un copolyamide, la proportion molaire de motifs issu de la condensation de la méta-xylylène diamine ou d'un mélange de méta-xylylène diamine et de para-xylylène diamine avec l'acide sébacique dans ledit copolyamide étant de préférence supérieure ou égale à 90 %, plus préférentiellement supérieure ou égale à 95 %.

13. Utilisation selon l'une des revendications 8 à 12, dans laquelle la composition comprend en outre des renforts, avantageusement des fibres, préférentiellement des fibres de verre et/ou des fibres de carbone, la proportion massique de renforts dans la composition étant de préférence inférieure ou égale à 70 %, avantageusement de 15 à 65 %, et plus préférentiellement de 20 à 60 %.

14. Utilisation selon l'une des revendications 8 à 13, dans laquelle les nanocharges carbonées sont utilisées sous forme d'une poudre de nanocharges carbonées ; ou dans laquelle les nanocharges carbonées sont utilisées sous une forme incorporée dans un mélange-maître du deuxième polyamide.

15. Procédé de préparation d'une composition selon l'une des revendications 1 à 7, comprenant la fourniture d'un mélange-maître comprenant le deuxième polyamide et les nanocharges carbonées, puis le mélange à l'état fondu, et de préférence le compoundage, dudit mélange-maître avec le premier polyamide et le cas échéant avec les renforts.

16. Procédé selon la revendication 15, comprenant une étape préliminaire de fabrication du mélange-maître par mélange à l'état fondu, et de préférence par compoundage, du deuxième polyamide avec les nanocharges carbonées.

17. Procédé de préparation d'une composition selon l'une des revendications 1 à 7, comprenant le mélange à l'état fondu, et de préférence le compoundage, du premier polyamide avec le deuxième copolyamide, et avec les nanocharges carbonées et le cas échéant les renforts, simultanément.

18. Procédé selon l'une des revendications 15 à 17, comprenant le refroidissement et la cristallisation de la composition, la composition étant de préférence collectée sous forme de granules.

19. Utilisation d'une composition selon l'une des revendications 1 à 7, pour constituer une structure monocouche ou au moins une couche d'une structure multicouche.

20. Utilisation selon la revendication 19, dans laquelle la structure est sous forme de fibres, de film, de tube, de corps creux ou d'une pièce injectée.

21. Procédé de fabrication d'un objet, comprenant une étape de moulage par injection de la composition selon l'une des revendications 1 à 7.

22. Objet fabriqué à partir d'une composition selon l'une des revendications 1 à 7, de préférence par moulage par injection.

23. Objet selon la revendication 22, qui est une pièce mécanique pour le transport et notamment pour automobile, autocar, camion, train, navire ou aéronef, un article destiné au bâtiment, un article domestique, un article électrique, un article électronique, un article médical ou un article de sport et notamment de ski.

## Patentansprüche

1. Zusammensetzung, umfassend ein erstes Polyamid, ein zweites Polyamid, das von dem ersten Polyamid verschieden ist, und 0,1 bis 5 Massen-% Kohlenstoff-Nanofüllstoffe, wobei:
- das erste Polyamid eine Einheit, die sich aus der Kondensation von meta-Xylylendiamin oder einer Mischung von meta-Xylylendiamin und para-Xylylendiamin mit Sebacinsäure ergibt, umfasst, wobei das erste Polyamid eine Schmelztemperatur Tf₁ aufweist;
- das zweite Polyamid eine Schmelztemperatur Tf₂ aufweist, die größer oder gleich Tf₁-40°C ist;
und wobei es sich bei den Kohlenstoff-Nanofüllstoffen um Kohlenstoff-Nanoröhrchen handelt.

2. Zusammensetzung nach Anspruch 1, umfassend 0,2 bis 2 Massen-% Kohlenstoff-Nanofüllstoffe, vorzugsweise 0,5 bis 1,5 Massen-% Kohlenstoff-Nanofüllstoffe.

3. Zusammensetzung nach Anspruch 1 oder 2, wobei das zweite Polyamid einen solchen Schmelzpunkt Tf₂ aufweist, dass Tf₁-40°C ≤ Tf₂ < Tf₁+60°C, vorzugsweise Tf₁-40°C ≤ Tf₂ < Tf₁+20°C, noch weiter bevorzugt Tf₁-30°C ≤ Tf₂ ≤ Tf₁+10°C; oder wobei es sich bei dem zweiten Polyamid um Polyundecanamid handelt.

4. Zusammensetzung nach einem der Ansprüche 1 bis 3, wobei das zweite Polyamid in einem Anteil von 0,1 bis 20 Massen-%, vorzugsweise 1 bis 10 Massen-%, bezogen auf die Summe des ersten Polyamids und des zweiten Polyamids, vorliegt.

5. Zusammensetzung nach einem der Ansprüche 1 bis 4, wobei es sich bei dem ersten Polyamid um ein Homopolyamid oder ein Copolyamid handelt, wobei der molare Anteil an Einheiten, die sich aus der Kondensation von meta-Xylylendiamin oder einer Mischung von meta-Xylylendiamin und para-Xylylendiamin mit Sebacinsäure ergeben, in dem Copolyamid vorzugsweise größer oder gleich 90 % und weiter bevorzugt größer oder gleich 95 % ist.

6. Zusammensetzung nach einem der Ansprüche 1 bis 5, die außerdem Verstärkungsmittel, vorteilhafterweise Fasern, vorzugsweise Glasfasern und/oder Kohlefasern, umfasst, wobei der Massenanteil an Verstärkungsmitteln in der Zusammensetzung vorzugsweise kleiner oder gleich 70 % ist und vorteilhafterweise 15 bis 65 % und weiter bevorzugt 20 bis 60 % beträgt.

7. Zusammensetzung nach einem der Ansprüche 1 bis 6 mit einem gemäß der ASTM-Norm D257 bestimmten spezifischen Oberflächenwiderstand größer oder gleich 10¹⁰ Ω/sq, vorzugsweise größer oder gleich 10¹² Ω/sq.

8. Verwendung von Kohlenstoff-Nanofüllstoffen als Nukleierungsmittel für die Kristallisation einer Zusammensetzung, umfassend ein erstes Polyamid, ein zweites Polyamid, das von dem ersten Polyamid verschieden ist, wobei:
- das erste Polyamid eine Einheit, die sich aus der Kondensation von meta-Xylylendiamin oder einer Mischung von meta-Xylylendiamin und para-Xylylendiamin mit Sebacinsäure ergibt, umfasst, wobei das erste Polyamid eine Schmelztemperatur Tf₁ aufweist;
- das zweite Polyamid eine Schmelztemperatur Tf₂ aufweist, die größer oder gleich Tf₁-40°C ist;
wobei es sich bei den Kohlenstoff-Nanofüllstoffen um Kohlenstoff-Nanoröhrchen handelt.

9. Verwendung nach Anspruch 8, wobei die Kohlenstoff-Nanofüllstoffe in einem Gehalt von umfassend 0,2 bis 2 Massen-%, vorzugsweise 0,5 bis 1,5 Massen-%, bezogen auf die gesamte Zusammensetzung, verwendet werden.

10. Verwendung nach Anspruch 8 oder 9, wobei das zweite Polyamid einen solchen Schmelzpunkt Tf₂ aufweist, dass Tf₁-40°C ≤ Tf₂ < Tf₁+60°C, vorzugsweise Tf₁-40°C ≤ Tf₂ < Tf₁+20°C, noch weiter bevorzugt Tf₁-30°C ≤ Tf₂ ≤ Tf₁+10°C; oder wobei es sich bei dem zweiten Polyamid um Polyundecanamid handelt.

11. Verwendung nach einem der Ansprüche 8 bis 10, wobei das zweite Polyamid in einem Anteil von 0,1 bis 20 Massen-%, vorzugsweise 1 bis 10 Massen-%, bezogen auf die Summe des ersten Polyamids und des zweiten Polyamids, vorliegt.

12. Verwendung nach einem der Ansprüche 8 bis 11, wobei es sich bei dem ersten Polyamid um ein Homopolyamid oder ein Copolyamid handelt, wobei der molare Anteil an Einheiten, die sich aus der Kondensation von meta-Xylylendiamin oder einer Mischung von meta-Xylylendiamin und para-Xylylendiamin mit Sebacinsäure ergeben, in dem Copolyamid vorzugsweise größer oder gleich 90 % und weiter bevorzugt größer oder gleich 95 % ist.

13. Verwendung nach einem der Ansprüche 8 bis 12, wobei die Zusammensetzung außerdem Verstärkungsmittel, vorteilhafterweise Fasern, vorzugsweise Glasfasern und/oder Kohlefasern, umfasst, wobei der Massenanteil an Verstärkungsmitteln in der Zusammensetzung vorzugsweise kleiner oder gleich 70 % ist und vorteilhafterweise 15 bis 65 % und weiter bevorzugt 20 bis 60 % beträgt.

14. Verwendung nach einem der Ansprüche 8 bis 13, wobei die Kohlenstoff-Nanofüllstoffe in Form eines Pulvers von Kohlenstoff-Nanofüllstoffen verwendet werden oder wobei die Kohlenstoff-Nanofüllstoffe in einer in einen Masterbatch des zweiten Polyamids eingearbeiteten Form verwendet werden.

15. Verfahren zur Herstellung einer Zusammensetzung nach einem der Ansprüche 1 bis 7, umfassend das Bereitstellen eines Masterbatch, der das zweite Polyamid und die Kohlenstoff-Nanofüllstoffe umfasst, und dann das Schmelzemischen und vorzugsweise Compoundieren des Masterbatch mit dem ersten Polyamid und gegebenenfalls mit den Verstärkungsmitteln.

16. Verfahren nach Anspruch 15, umfassend einen vorgeschalteten Schritt der Herstellung des Masterbatch durch Schmelzemischen und vorzugsweise durch Compoundieren des zweiten Polyamids mit den Kohlenstoff-Nanofüllstoffen.

17. Verfahren zur Herstellung einer Zusammensetzung nach einem der Ansprüche 1 bis 7, umfassend das gleichzeitige Schmelzemischen und vorzugsweise Compoundieren des ersten Polyamids mit dem zweiten Copolyamid und mit den Kohlenstoff-Nanofüllstoffen und gegebenenfalls den Verstärkungsmitteln.

18. Verfahren nach einem der Ansprüche 15 bis 17, umfassend das Abkühlen und das Kristallisieren der Zusammensetzung, wobei die Zusammensetzung vorzugsweise in Granulatform gesammelt wird.

19. Verwendung einer Zusammensetzung nach einem der Ansprüche 1 bis 7 zur Bildung einer einschichtigen Struktur oder mindestens einer Schicht einer mehrschichtigen Struktur.

20. Verwendung nach Anspruch 19, wobei die Struktur in Faser-, Folien-, Rohr-, Hohlkörper- oder Spritzgussteil-Form vorliegt.

21. Verfahren zur Herstellung eines Objekts, umfassend einen Schritt des Spritzgießens der Zusammensetzung nach einem der Ansprüche 1 bis 7.

22. Objekt, hergestellt aus einer Zusammensetzung nach einem der Ansprüche 1 bis 7, vorzugsweise durch Spritzgießen.

23. Gegenstand nach Anspruch 22, bei dem es sich um ein mechanisches Teil für den Transport und insbesondere für ein Auto, einen Bus, einen Lastwagen, einen Zug, ein Schiff oder ein Luftfahrzeug, einen Artikel für das Bauwesen, einen Haushaltsartikel, einen elektrischen Artikel, einen elektronischen Artikel, einen medizinischen Artikel oder einen Sportartikel und insbesondere Skiartikel handelt.

## Claims

1. Composition comprising a first polyamide, a second polyamide distinct from the first polyamide and from 0.1 to 5% by weight of carbon-based nanofillers, in which:
- the first polyamide comprises a unit resulting from the condensation of meta-xylylenediamine or of a mixture of meta-xylylenediamine and para-xylylenediamine with sebacic acid, said first polyamide exhibiting a melting point Tf₁;
- the second polyamide exhibits a melting point Tf₂ of greater than or equal to Tf₁-40°C,
and in which the carbon-based nanofillers are carbon nanotubes.

2. Composition according to Claim 1, comprising from 0.2 to 2% by weight of carbon-based nanofillers and preferably from 0.5 to 1.5% by weight of carbon-based nanofillers.

3. Composition according to Claim 1 or 2, in which the second polyamide exhibits a melting point Tf₂ such that Tf₁-40°C ≤ Tf₂ < Tf₁+60°C, preferably Tf₁-40°C ≤ Tf₂ < Tf₁+20°C, and more particularly preferably Tf₁-30°C ≤ Tf₂ ≤ Tf₁+10°C; or in which the second polyamide is polyundecanamide.

4. Composition according to one of Claims 1 to 3, in which the second polyamide is present in a proportion of 0.1 to 20% by weight, preferably of 1 to 10% by weight, with respect to the sum of the first polyamide and of the second polyamide.

5. Composition according to one of Claims 1 to 4, in which the first polyamide is a homopolyamide or a copolyamide, the molar proportion of units resulting from the condensation of meta-xylylenediamine or of a mixture of meta-xylylenediamine and para-xylylenediamine with sebacic acid in said copolyamide preferably being greater than or equal to 90% and more preferably greater than or equal to 95%.

6. Composition according to one of Claims 1 to 5, additionally comprising reinforcers, advantageously fibers, preferably glass fibers and/or carbon fibers, the proportion by weight of reinforcers in the composition preferably being less than or equal to 70%, advantageously from 15 to 65% and more preferably from 20 to 60%.

7. Composition according to one of Claims 1 to 6, exhibiting a surface resistivity of greater than or equal to 10¹⁰ Ω/sq, preferably of greater than or equal to 10¹² Ω/sq, determined according to the standard ASTM D257.

8. Use of carbon-based nanofillers as nucleating agent for the crystallization of a composition comprising a first polyamide and a second polyamide distinct from the first polyamide, in which:
- the first polyamide comprises a unit resulting from the condensation of meta-xylylenediamine or of a mixture of meta-xylylenediamine and para-xylylenediamine with sebacic acid, said first polyamide exhibiting a melting point Tf₁;
- the second polyamide exhibits a melting point Tf₂ of greater than or equal to Tf₁-40°C,
in which the carbon-based nanofillers are carbon nanotubes.

9. Use according to Claim 8, in which the carbon-based nanofillers are used in a content of 0.2 to 2% by weight, preferably of 0.5 to 1.5% by weight, with respect to the total composition.

10. Use according to one of Claims 8 or 9, in which the second polyamide exhibits a melting point Tf₂ such that Tf₁-40°C ≤ Tf₂ < Tf₁+60°C, preferably Tf₁-40°C ≤ Tf₂ < Tf₁+20°C, and more particularly preferably Tf₁-30°C ≤ Tf₂ ≤ Tf₁+10°C; or in which the second polyamide is polyundecanamide.

11. Use according to one of Claims 8 to 10, in which the second polyamide is present in a proportion of 0.1 to 20% by weight, preferably of 1 to 10% by weight, with respect to the sum of the first polyamide and of the second polyamide.

12. Use according to one of Claims 8 to 11, in which the first polyamide is a homopolyamide or a copolyamide, the molar proportion of units resulting from the condensation of meta-xylylenediamine or of a mixture of meta-xylylenediamine and para-xylylenediamine with sebacic acid in said copolyamide preferably being greater than or equal to 90%, more preferably greater than or equal to 95%.

13. Use according to one of Claims 8 to 12, in which the composition additionally comprises reinforcers, advantageously fibers, preferably glass fibers and/or carbon fibers, the proportion by weight of reinforcers in the composition preferably being less than or equal to 70%, advantageously from 15 to 65% and more preferably from 20 to 60%.

14. Use according to one of Claims 8 to 13, in which the carbon-based nanofillers are used in the form of a powder of carbon-based nanofillers or in which the carbon-based nanofillers are used in a form incorporated in a masterbatch of the second polyamide.

15. Process for the preparation of a composition according to one of Claims 1 to 7, comprising the provision of a masterbatch comprising the second polyamide and the carbon-based nanofillers and then the melt blending and preferably the compounding of said masterbatch with the first polyamide and, if appropriate, with the reinforcers.

16. Process according to Claim 15, comprising a preliminary stage of manufacture of the masterbatch by melt blending and preferably by compounding the second polyamide with the carbon-based nanofillers.

17. Process for the preparation of a composition according to one of Claims 1 to 7, comprising the melt blending and preferably the compounding of the first polyamide with the second copolyamide and with the carbon-based nanofillers and, if appropriate, the reinforcers, simultaneously.

18. Process according to one of Claims 15 to 17, comprising the cooling and the crystallization of the composition, the composition preferably being collected in the form of granules.

19. Use of a composition according to one of Claims 1 to 7 to form a monolayer structure or at least one layer of a multilayer structure.

20. Use according to Claim 19, in which the structure is in the form of fibers, of a film, of a pipe, of a hollow body or of an injection-molded part.

21. Process for the manufacture of an object, comprising a stage of injection molding the composition according to one of Claims 1 to 7.

22. Object manufactured from a composition according to one of Claims 1 to 7, preferably by injection molding.

23. Object according to Claim 22, which is a mechanical part for transportation and in particular for a motor vehicle, bus, truck, train, ship or aircraft, an item intended for the construction industry, a household item, an electrical item, an electronic item, a medical item or a sports item and in particular skiing item.
